# EUROPEAN PATENT APPLICATION

(11) **EP 0 623 871 A2**
(43) Date of publication of application: **09.11.1994**
(21) Application number: 94302575.9
(22) Date of filing: 12.04.1994
(51) Int. Cl.: G06F 3/023, G06F 3/033

(54) **Window management system utilizing icons and miniature windows**

(30) Priority: 04.05.1993 CA 2095448
(71) Applicant: International Business Machines Corporation, Armonk, N.Y. 10504 (US)
(72) Inventor: Beaudet, Phillip J., Pickering, Ontario (CA); Merks, Eduardus Antonius Theodorus, North York, Ontario (CA); Rendall, Martin N., Scarborough, Ontario (CA); Spall, Roger P., North York, Ontario (CA)
(74) Representative: Williams, Julian David

(57) **Abstract**

A system for accessing and performing management operations on file windows is disclosed. A control window containing icons representing each file in a product or system is linked to the files. Each icon in the control window is also capable of projecting a miniature window dynamically linked (in terms of content and parameters) to the actual file represented by the icon. File management operations, such as moving and sizing, performed on either the iconic or miniature window representations in the control window are transmitted directly to the files and implemented, whether the files' main windows are open or closed at the time the operations are performed.

## Description

The present invention relates to a window access and management system utilizing icons and miniature windows.

An icon is a pictorial representation on a computer display screen of an object, an action, a property, or some other concept. Icons can be displayed within control windows for representing entire programs or files in programs, and can be used in direct manipulation operations. For example, U.S. Patent No. 5,140,677 - Fleming et al., is directed to a "mini-icon". As described therein, dragging a document to a folder's mini-icon results in moving or copying that document into the folder. Similarly, in U.S. Patent No. 5,072,412 - Henderson, et al., displayed objects, such as icons, may be moved to different workspaces to regroup their associated files differently.

In U.S. Patent No. 5,140,678 - Torres, common user interface symbols, such as the title window bar, command bar, and scroll bars are replaced by icons.

U.S. Patent No. 5,179,655 - Noguchi, et al., addresses the situation in which a displayed file window becomes completely hidden by other window(s) displayed over top it, by providing for the generation of an icon displayed in a superordinate location of the display screen, as a conduit to enable the user to re-access the hidden window. U.S. Patent No. 4,868,765 - Diefendorff, addresses the same problem somewhat differently by providing a porthole that allows the user to view portions of windows hidden behind other windows.

Another porthole or miniature window concept is described in U.S. Patent No. 4,823,303 - Terrasawa, which is directed to providing "viewport" windows for a main file window. While one "miniature" viewport provides an overview of the file, the other provides a close-up, detailed view of a portion of the overview window.

Also, in U.S. Patent No. 5,072,412, a window "pictogram" may be displayed with the representative icon "pictogram" so that the user can obtain more information about the content of the corresponding display object without actually viewing the main window for the object.

Finally, U.S. Patent No. 4,974,173 - Stefik, et al., is directed to "small-scale representations" or miniature windows that appear on the screen simultaneously with the main file window to provide a record of changes made in the file data.

As is common in the art, user access to icons for performing operations in any of the described applications is by input through locator input devices, the most common of which is the mouse. It should be noted that tabbing can also be used in active windows to move along the title bar for performing operations and registering operations by pressing the terminal "ENTER" key. Scroll bars in window frames are also sometimes accessible by the "page up" and "page down" terminal cursor keys, as well as by the mouse cursor itself.

The present invention is directed to a control window containing icons that permit the user to perform a number of operations on the parameters of product windows, whether or not those windows are actually open at the time the operations are registered on the icons.

Although icons are merely representative pictograms of the file types they denote, it is not always easy for the user to visualize the effect of operations performed on file window parameters, such as sizing, moving, etc. Accordingly, the present invention also provides miniature windows associated with each icon that can be displayed from the relative icon through which the various window operations can be performed.

The miniature windows presented in this invention are dynamic, and reflect the input of both control and parameter changes made directly to the associated product windows.

Accordingly, in one aspect, the present invention provides a control window container for performing window management operations in a computer system having a display, a locator input device associated with the display, and a plurality of product windows adapted for selective display in a multiple window format. The container consists of means for displaying a plurality of icons where each icon represents a separate product window, means for displaying a miniature window in association with each displayed icon, and link data means for linking each displayed icon to its corresponding product window. The link data means permits transmission of window management operations performed by the user through the locator input device on either a displayed icon or its associated miniature window, to the corresponding product window.

In another aspect, the present invention is also directed to a method for performing file window management operations in a computer system having a display and locator input means associated with the display. The method includes the computer implemented steps of creating and displaying a control container, displaying inside the container an array of icons where each icon represents a separate product window within the computer system, and linking the icons with their corresponding product windows for transmitting window management operations from the icons to the product windows. In response to user performed operations on the icons through the locator input device, the method also provides for displaying within the container miniature windows for selected icons, and in response to user performed operations through the locator input device on either the icons or miniature windows, the method provides for transmitting the window management operations for performance to the corresponding product windows.

Embodiments of the invention will now be described in detail in association with the accompanying drawings, in which:
Figure 1 is a pictorial view of a window management control window displaying a plurality of icons, in a multiple window format, according to the invention;
Figure 2 is a view similar to Figure 1, showing the control window with a pop-up menu selected on one of the icons;
Figure 3 is a view similar to Figure 1, showing miniature windows constructed inside the control window, according to the invention;
Figure 4 is a view similar to Figure 1, showing icons displayed in a tree hierarchy in the control window, according to another aspect of the invention;
Figure 5 is a view similar to Figure 1, of miniature windows displayed in a tree hierarchy in the control window, according to a further aspect of the invention;
Figure 6 is a flow diagram setting forth the computer implemented steps for display and management of the control window; and
Figure 7 is a flow diagram setting forth the computer implemented steps for effecting window management operations through product windows interacting with icons contained in the control window.

The present invention provides the computer user with a single control window container on a computer display containing a representation of each of a multiple of product windows or related file windows in a single product. For the purposes of the present application, the generic term "product window" is used to designate these types of windows. The main/control window container permits the user to control the individual product windows by using or manipulating the representations, and in one aspect, to integrate the individual windows together.

The term "container" used in this application refers to a window display object that contains other display objects such as icons and miniature windows within its frame or boundary. As a display object, standard user interface techniques are available to control its opening and closing, size, location, etc. When the displayed contents of the container overflow its set parameters, standard scrolling is available to increase its usable display area.

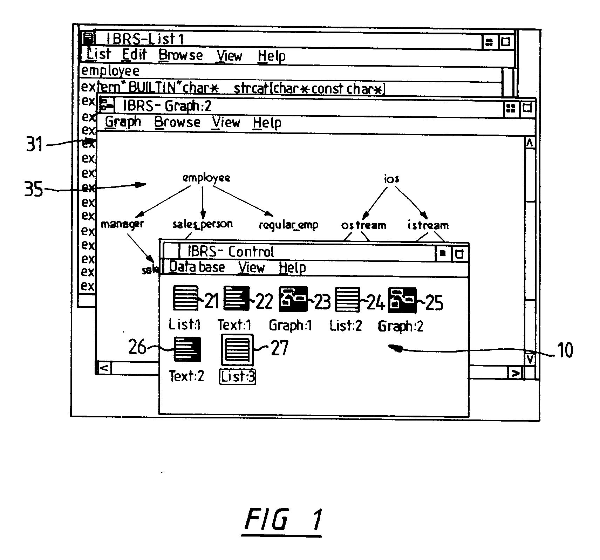

A control window container 10 containing multiple icons (generally designated by numeral 20) is illustrated in Figure 1. Each icon represents a separate open product window, which can be selected for display on the display screen simultaneously with the control window 10. For example, the "List:1" icon 21 represents the displayed "List:1" window 31 and "Graph:2" icon 25 represents the displayed "Graph:2" window 35. The remaining icons ("Text:1" 22, "Graph:1" 23, "List:2" 24, "Text:2" 26, and "List:3" 27) represent hidden windows (i.e., windows that are not currently displayed on the display screen, but are still "open" windows in the operating system).

In one aspect of the invention, a visual indicator can be provided to the user to distinguish icons representing displayed windows from those representing hidden windows. This is especially useful to avoid confusion to the user where larger numbers of icons for related product windows are displayed in the control window 10. As illustrated in Figure 1, both of the "List:1" and "Graph:2" icons 21 and 25 respectively, are displayed with a distinctive border to designate that their corresponding product windows are displayed. Alternate highlighting features known in the art could also be used.

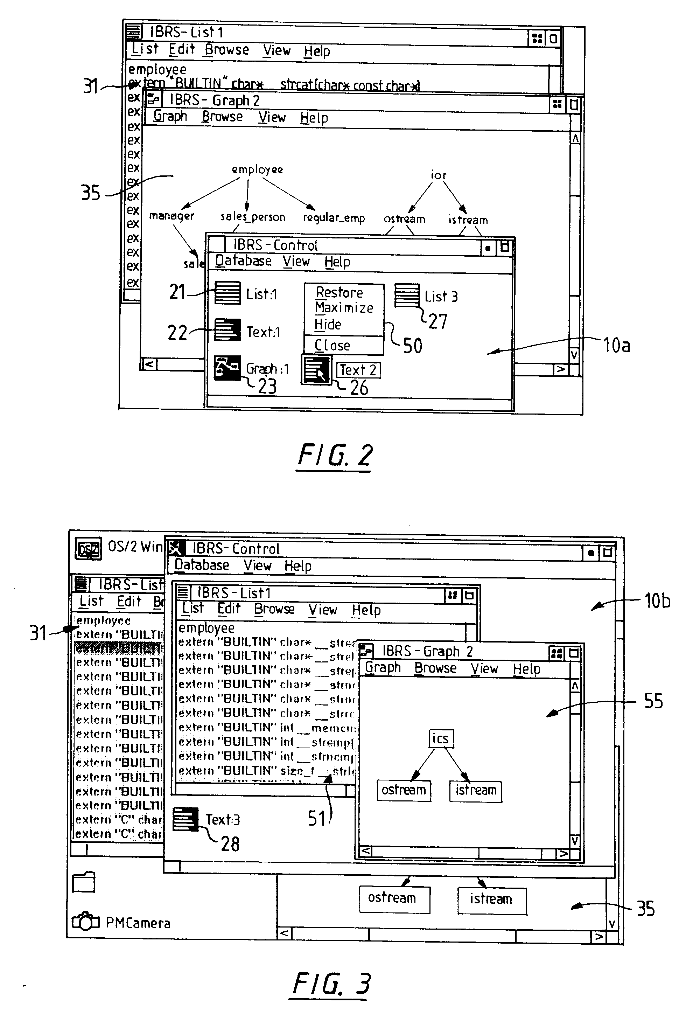

The visual indicator for icons to denote displayed product windows (a distinctive border in the preferred embodiment) is to be distinguished from the visual indicator used to denote an active icon (the icon that is the subject of the window focus area) in the control window 10. This is shown as a highlighted label in the preferred embodiment (see icon 27 in Figure 1; icon 26 in Figure 2), although other indicator means known in the art might also be considered. The preferred embodiment allows only one focus area in the control window, and therefore, only one icon will be active, that is, subject to the focus area, at a time. (It should be noted that possible alternate embodiments could provide for the presence on the display of more than one focus area at a time.) By contrast, more than one product window may be displayed in the multiple window format on the display screen at a time, so that more than one icon in the control window 10 may be shown with a distinctive border.

In the preferred embodiment, common icon symbols are used to denote the same types of product windows. Thus, all "Graph" windows are represented by an icon suggesting a graphic depiction (see icons 23 and 25), etc. This is a user interface technique used to simplify the displayed presentation.

In Figure 1, the icons displayed in the control window 10 are arranged horizontally, wrapped at the right hand side of the window. Another possible arrangement illustrated in Figure 2 is to arrange the icons vertically in the control window 10a, from top to bottom wrapped at the bottom of the control window. The user can alter the icon arrangement in the control window (as described below) and thus can tailor the display to suit individual preference.

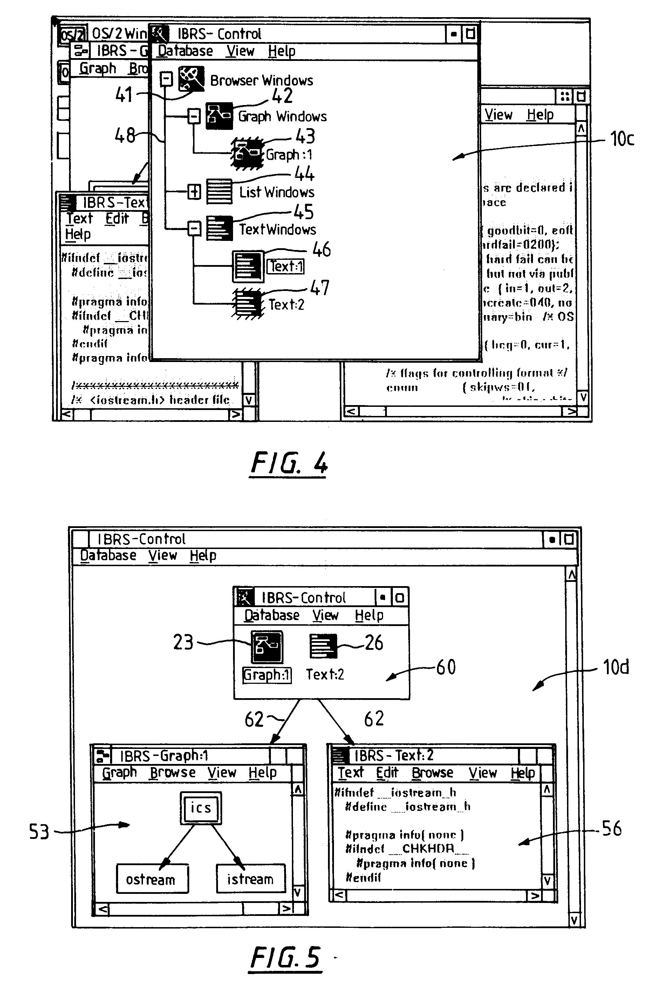

Figure 4 illustrates a further embodiment of an icon control window 10c in an advanced application particularly suited to unitary products with multiple related files or product windows. In the control window 10c, the hierarchical relationship or dependence between the files or product windows represented by the icons, is shown. Each individual product window that is represented by an icon is arranged in some form of tree relationship. The placement and arrangement of the icon representations denotes some relationship between the actual individual product windows that may not be readily apparent to the user. As illustrated in Figure 4, the icon window representations are displayed as leaf nodes (42 through 47) in the tree. The root node 41 is the icon for the entire product (a browser in the preferred embodiment) denoting that all icon window representations are part of the overall product. Icon window representations of the same type are grouped under an icon denoting that type of window. Descriptive text labelling accompanies the icons in this embodiment to differentiate different levels in the file hierarchy because common icons (42 and 43; 45, 46 and 47) are used to denote both generic and specific product windows. A hierarchical display of the type illustrated in Figure 4 would clearly be particularly useful in object oriented technology, where the characteristics (functions, types) of files (objects) are defined by the hierarchical structure of a class library.

As illustrated in Figure 2, a pop-up menu 50 (obtained by locating the mouse cursor directly on the desired icon and single-clicking the mouse) lists the functions that can be performed on a product window through its representative icon. Selection of an operation from the pop-up window 50 will alter the parameters of the product window in the selected manner.

In addition, standard user interface techniques are used to indicate to the user what operations are available or unavailable to be performed at any time on a product window through its representative icon. For example, the pop-up window 50 for "Text:2" icon 26, lists four operations, but as the corresponding file window is not displayed but hidden, the "Hide" operation in the pop-up window 50 is "grayed out" to show that the operation is not currently available to be performed on this product window.

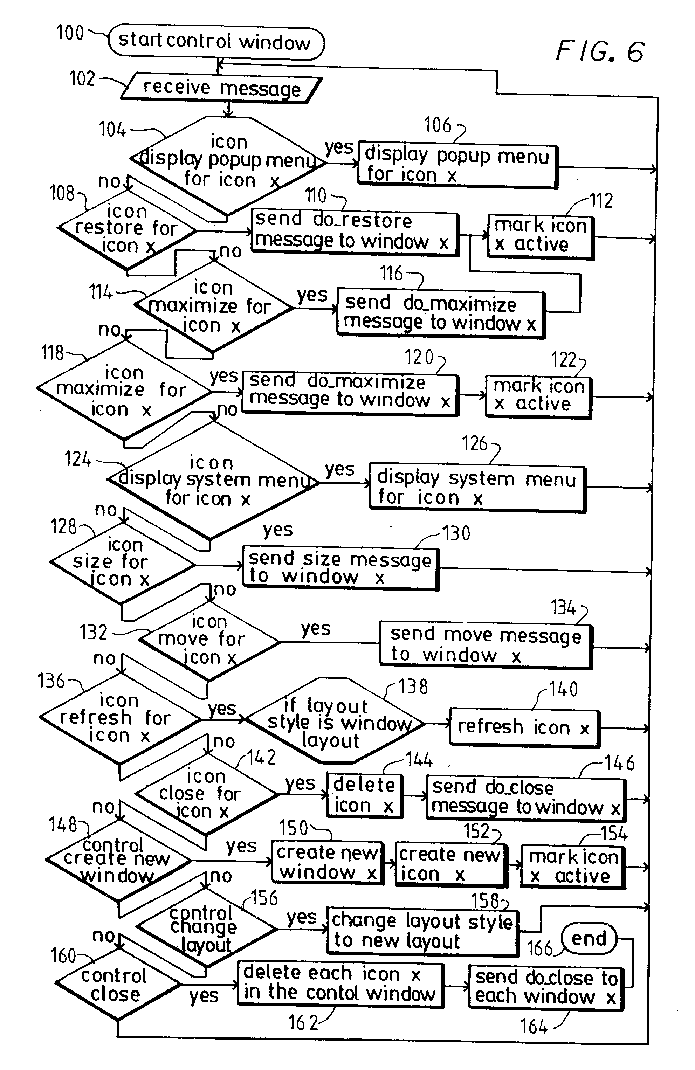

File related operations can also be performed through the use of miniature windows which, like the pop-up windows, are displayed in the icon control window 10 as illustrated in Figures 3 and 5, in control windows 10b and 10d, respectively.

In the more general application of the preferred embodiment shown in Figure 3, miniature windows 51 and 55, corresponding to files windows 31 ("List:1") and 35 ("Graph:2") respectively, are displayed within the frame of the control window 10b.

The miniature window is a dynamic picture of the product window it represents, the contents and parameters of which change to reflect changes made in the contents or parameters of the product window. The contents of a miniature cannot be directly changed. However, operations performable on the parameters of the product window can be performed on the parameters of its associated miniature window, and directly affect the same parameters of the product window. Features of this representation could include any of the usual operations allowed in the individual windows themselves, such as re-sizing, moving, minimizing, maximizing and restoring. For example, re-sizing the actual product window will result in re-sizing of the corresponding miniature window representation in the control window 10; similarly, re-sizing the miniature window in the control window 10 will result in the re-sizing of the corresponding product window. This example could apply equally to other window operations such as moving and restoring.

Possible features for inclusion in the miniature windows include system and pull-down menus, title bars, minimize, hide and maximize buttons, minimize icons where the product window is being minimized, a miniature window denoting the product window, and a scaled down version of the client area contents of the actual individual product window displayed in the miniature window's own client area.

Window representations are placed according to their relative position on the entire screen. Moving or re-sizing a miniature window in the control window 10 will cause its corresponding product window to be moved or re-sized; moving or re-sizing a product window will cause the corresponding miniature window to be adapted accordingly. Windows can be minimized to the client area of the control window, and minimized windows are represented by an "inactive" icon (i.e.. absent the distinctive border) in the control window 10 (see for example icon 28 in control window 10b in Figure 3).

A more specialized application of the miniature window aspect of this invention is illustrated in Figure 5. Within the control window 10b, a miniature window 60 for the control window container itself, is displayed along with miniature windows for "Graph:1" 53 (corresponding to icon 23) and "Text:2" 56 (corresponding to icon 26). The miniature windows shown in Figure 5 are derived from the hierarchical format shown in Figure 4 (control window 10c) and the downwardly directed arcs or arrows 62 connecting the miniature window 60 for the control container to the other two miniature windows 53 and 56 illustrates the hierarchical relationship between the actual product windows represented by the miniature windows. In other words, the miniature control window 60 in Figure 5, being the miniature window representing browser control icon 41 (the overall product in this example), is the superclass for each of the "Graph:1" and "Text:2" files (represented by their icons 43 and 47 in Figure 4 and by their miniature windows 53 and 56 in Figure 5).

The flow diagram of Figure 6 illustrates the numerous window management operations that can be performed through icons or miniature windows in the control window, according to the invention. For simplicity, the term "icon" is used throughout the flow diagram, but it should be noted that the many of the same operations can be implemented through miniature windows displayed on their corresponding icons, and the preferred embodiment covers this extended application.

On starting a control window for a particular product (block 100), links are established with all open product windows (whether displayed or hidden) and a display of the control window with icons linked to each of the product windows is executed (block 102).

In using the control window, where the user selects to display a pop-up menu for a particular icon "x" (block 104), the computer displays the pop-up menu (block 106).

Operations from the pop-up menu include "icon restore" (block 108), "icon maximize" (block 114), and "icon minimize" (block 118).

The "icon restore" operation (block 108) displays the product window represented by the icon (block 110) and implements an "active" visual indicator (e.g. a border) on the icon to show that its product window is displayed (block 112).

The "icon maximize" operation (block 114) will either maximize the size of a displayed product window or display the product window directly at its maximum size (block 116). If the icon is not already marked as active (i.e. window open border), execution of this operation will cause the border to appear (block 112).

The converse operation is "icon minimize" (block 118) that hides the associated file window (block 120), without closing or terminating the link between the control window and the product window. On hiding its associated product window, the icon is marked as inactive (block 122), that is the indicator border is removed.

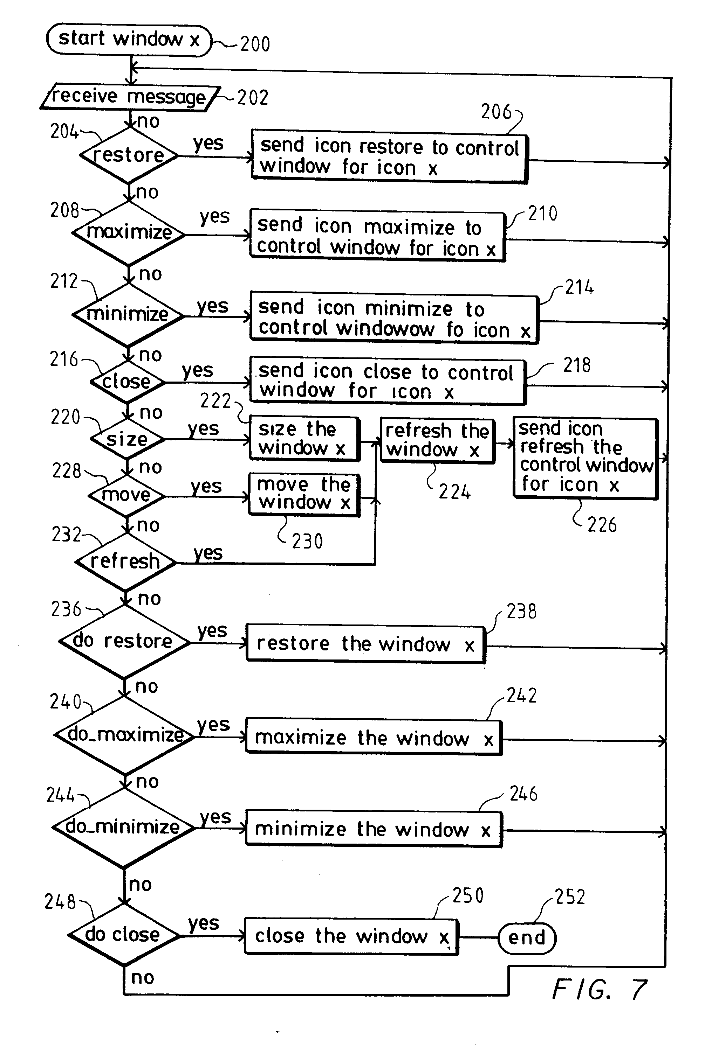

The "display system menu" operation (block 124) relates specifically to miniature window use. The operation will display the system menu for the product window (block 126) from the title bar in the associated miniature window frame. This menu will contain the standard window operations shown in the flow diagram of Figure 7, such as "restore" (block 204), "maximize" (block 208) and "minimize" (block 212) and permits performance of these operations on the product window through implementing the locator input device on the specific operation displayed in the miniature window.

Other operations performable on a miniature window to directly affect the parameters of the corresponding product window include sizing (block 128) and moving (block 132).

Performing a change of size operation (block 128) directly changes the size of the corresponding product window if displayed, or is recorded in the hidden product window's parameters (block 130). Similarly, performing a "move icon" operation (block 132) will be readily seen as movement of the corresponding displayed product window on the display screen (block 134).

In order to remove the link between the control window and the file, the "icon close" operation (block 142), which can be implemented through either the icon or miniature window, deletes the icon from the control window (block 144) and removes the product window, if displayed, or simply severs the link between the control window and the product window so that the product window can no longer be accessed (block 146).

The "icon refresh" operation (block 136) causes the miniature window displaying the contents of a product window to be refreshed reflecting any changes made in those contents (block 138). Performing this operation involves copying a suitably transformed image of the actual product window contents into the "contents" of the miniature window (block 140).

Operations that have a direct effect on the control window itself include creating new file windows (block 148), changing the layout of icons in the control window (block 156) and closing the control window (block 160).

On adding a new product window, the "control create new window" operation (block 148) establishes a link between the control window 10 and the new product window (i.e., creating a new product window in relation to the control window - block 150) and establishes a new icon in the control window representing the new window (block 152) and providing the visual representation of the link between the control window and the new product window. The new icon is immediately marked as active in the focus area (block 154).

As is known, icons in the control window can be rearranged simply by depressing the mouse button and dragging each icon to the desired new location. Either this manual method or pre-programmed arrangements can be effected through an operation for "control change layout" (block 156) which causes computer implementation of the layout change (blocks 158 and 102).

The "control close" (block 160) operation closes the control window, deleting the icons from the display (block 162) and severing links with the various product windows by closing them (block 164) to exit the control window program (block 166).

Figure 7 sets forth computer implemented operations in a product window represented in the control window by either an icon or a miniature window.

The operation to start a product window (block 200) sends a message to establish a link (for passing window management operations) between the control window and the new product window (block 202). Once the link has been established, the following operations can be performed on the product window through its representative icon in the control window:
1. "restore" operation (block 204) to display the product window sends an "icon restore" command (block 206) to the control window that is received and executes the "icon restore" operation (blocks 108 and 110 in Figure 6) marking the icon as "active" (block 112 in Figure 6);
2. "maximize" operation (block 208 in Figure 7) to send an "icon maximize" command to the control window (block 210), received and executed as a "icon maximize" operation (blocks 114 and 116 in Figure 6) to display, if necessary, and maximize the size of the product window, while also marking the icon as "active" (block 112 in Figure 6);
3. "minimize" operation (block 208 in Figure 7) to send an "icon minimize" command to the control window (block 214), received and executed as "icon minimize" (blocks 118 and 120 in Figure 6) to hide the product window of icon "x" and mark icon "x" as "inactive" (block 122); and
4. "close" operation (block 216 in Figure 7) to send an "icon close" command (block 218) to close out the product window, delete the icon representing the file, and sever the link between the control window and the product window (blocks 142, 144 and 146 in Figure 6).

Operations performed directly on the product window parameters alter the parameters of the miniature window in the control window. These operations include changing the size of the product window (blocks 220 and 222 in Figure 7), and changing the location of the product window (blocks 228 and 230). After these operations, the product window is refreshed (block 224) as well as the associated icon (block 226 in Figure 7 leads to blocks 136, 138 and 140 in Figure 6). Any changes to the product window generate a "refresh" operation (block 232) to cause the same changes in the corresponding miniature window.

Finally, it will be recalled that operations performed on a miniature window affect the parameters of its associated product window. For the preferred embodiment, some of these operations are illustrated in Figure 7 (others would be obvious modifications to one skilled in the art), and include "do_restore" (block 236) to open the product window from the control window (block 238), "do_maximize" (block 240) to increase the size of the product window from the control window (block 242), and "do_minimize" (block 244) to close the product window (block 246).

This last operation can also be performed directly on the product window as a "do_close" operation (block 248) to close the product window (block 250) and to end (block 252).

Provision of a single control window containing icons and miniature windows representing multiple file windows has been particularly shown and described in relation to the concept of a single product where the multiple file windows are related. However, modifications to the described preferred embodiments will be obvious to one skilled in the art and are intended to be covered by the following claims.

## Claims

1. A control window container for performing file window management operations in a computer system having a display, a locator input device associated with the display and a plurality of product windows adapted for selective display in a multiple window format, the container comprising:
means for displaying a plurality of icons, each icon representing a separate product window;
means for displaying a miniature window in association with each displayed icon; and
link data means for linking each displayed icon to its corresponding product window for transmitting window management operations performed by a user through the locator input device, on a displayed icon or its associated miniature window, to said displayed icon's corresponding product window.

2. A control window container, as claimed in Claim 1, wherein said miniature window has contents reflecting contents in its corresponding product window, and the contents of the miniature window cannot be directly manipulated.

3. A control window container, as claimed in Claim 2, wherein the link data means is bi-directional for transmitting changes effected directly in the product window to said control window.

4. A control window container, as claimed in Claim 3, wherein the link data means further comprises means for refreshing the contents of the miniature window corresponding to the product window to display changes effected directly in the product window.

5. A control window container, as claimed in Claim 1, further comprising first indicator means for designating icons corresponding to displayed product windows.

6. A computer system comprising a control window container as claimed in any preceding claim.

7. A file window management method in a computer system having a display and locator input means associated with the display, comprising the computer implemented step of:
creating and displaying a control window container;
displaying within said container an array of icons, each icon representing a separate product window in the computer system;
linking said icons with their corresponding product windows for transmitting file window management operations from the icons to the product windows;
in response to user performed operations on icons through the locator input means, displaying within said container miniature windows for selected icons; and
in response to user performed operations on icons or miniature windows through the locator input means, transmitting window management operations to the corresponding product windows.

8. A file window management method, as claimed in Claim 7,wherein the step of displaying within said container miniature windows or selected icons in response to user performed operations, further comprises:
dynamically linking the displayed contents and parameters of said miniature windows with corresponding product windows for transmitting operations performed directly on said product windows to the corresponding miniature windows.

9. A file window management method, as claimed in Claim 7, further comprising means for highlighting icons in the control window corresponding to displayed product windows.

10. A file window management method, as claimed in Claim 7, further comprising means for highlighting one icon in the control window actively transmitting window management operations to a product window.
